# EUROPÄISCHE PATENTSCHRIFT

(11) **EP 1 947 418 B1**
(45) Veröffentlichungstag und Bekanntmachung des Hinweises auf die Patenterteilung: **13.05.2009**
(21) Anmeldenummer: 08100576.1
(22) Anmeldetag: 17.01.2008
(51) Int. Cl.: G01B 11/16

(54) **Optische Messeinrichtung und Verfahren zur Bestimmung einer Verformung eines elektrischen Leiters sowie Verwendung der Messeinrichtung**
Optical measuring device and method for determining a deformation in an electric conductor and use of the measuring device
Dispositif de mesure optique et procédé de détermination d'une déformation d'un conducteur électrique ainsi qu'utilisation du dispositif de mesure

(30) Priorität: 18.01.2007 DE 102007002722
(43) Veröffentlichungstag der Anmeldung: 23.07.2008
(73) Patentinhaber: SIEMENS AKTIENGESELLSCHAFT, 80333 München (DE)
(72) Erfinder: Bosselmann, Dr. Thomas, 91080, Marloffstein (DE)

(56) Entgegenhaltungen:
- EP-B1- 1 240 704
- WO-A-00/57540
- WO-A-02/15200
- US-A- 5 563 967

## Beschreibung

Die Erfindung betrifft eine optische Messeinrichtung mit einem elektrischen Leiter, welcher mit einem mehrschichtigen Wickelkörper aus einer Vielzahl von Windungen mindestens eines Wickelbandes versehen ist sowie ein Verfahren zur Bestimmung einer Verformung des elektrischen Leiters mittels der optischen Messeinrichtung. Zudem Betrifft die Erfindung eine Verwendung der Messeinrichtung und eine Verwendung des Verfahrens.

Der zu untersuchende elektrische Leiter kann Teil einer Wickelanordnung beispielsweise in einer elektrodynamischen Maschine im Bereich der elektrischen Energieerzeugung und -verteilung sein. Die elektrische Maschine kann dabei als Generator oder auch als Transformator ausgebildet sein. Eine solche elektrische Maschine stellt ein sehr teueres und langlebiges Investitionsgut dar. Ihr Ausfall ist gegebenenfalls mit sehr hohen Kosten verbunden. Deshalb wird zunehmend der Einsatz von einem insbesondere optischen Diagnosesystem zur frühzeitigen Erkennung von Defekten, wie beispielsweise Überdehnungen oder Brüche der elektrischen Leiter der Wickelanordnung, erwogen. Solche Defekte können im Betrieb beispielsweise durch schwingungsbedingte Verformung der Wickelanordnung bei hoher und dauerhafter Belastung auftreten. Der konstruktive Aufbau einer in der elektrischen Energieerzeugung eingesetzten Maschine ist derzeit bereits in vielfältiger Hinsicht optimiert. Insbesondere ist mittlerweile eine sehr kompakte Bauweise erreicht, bei der zumindest im aktiven Teil der elektrischen Maschine ein Sensor mit einem größeren Platzbedarf nicht ohne aufwendige Umkonstruktion der elektrischen Maschine unterzubringen ist. Außerdem liegt oftmals zwischen dem zu untersuchenden elektrischen Leiter und verschiedenen benachbarten Teilen eine hohe Potenzialdifferenz, die Werte von bis zu einigen 10 kV annehmen kann. Deshalb ist ein elektrischer Sensor in einem solchen elektrischen Gerät oftmals nicht einsetzbar. Weit besser eignet sich dagegen ein optischer Sensor, insbesondere ein faseroptischer Sensor. Letzterer weist nämlich eine sehr geringe Baugröße auf. Außerdem kann dank der dielektrischen Zuleitung in Form eines Lichtwellenleiters auch eine hohe Potenzialdifferenz problemlos überbrückt werden.

Die US-5563967 beschreibt wie aus dem Unterschied zwischen zwei optischen Signalen die Verformung eines Objektes bestimmt werden kann.

In der EP 1 240 704 B1 ist eine optische Messeinrichtung für eine elektrodynamische Maschine angegeben, deren optischer Sensor an einem als Leiterstab ausgeführten elektrischen Leiter angeordnet ist. Aus Isolationsgründen ist der elektrischen Leiter mit einer elektrischen Isolierung in Form eines mehrschichtigen Wickelkörpers versehen. Um ein möglichst genaues Messergebnis zu erhalten, ist es günstig, den optischen Sensor möglichst nahe am zu untersuchenden elektrischen Leiter zu positionieren, und zwar zwischen dem elektrischen Leiter und dem Wickelkörper. Bedingt durch die unterschiedliche thermische Ausdehnung des elektrischen Leiters, der beispielsweise aus einer Kupferseele aus mehreren Teilleitern besteht, und der den elektrischen Leiter umgebenden Isolierung, die beispielsweise aus mehreren Schichten mit EpoxidHarz imprägnierter Glasfaserseide besteht, löst sich in der Regel nach einer gewissen Zeit die mit dem elektrischen Leiter in kraftschlüssiger Verbindung stehende Isolierung vom elektrischen Leiter und bewegt sich bei Lastwechseln relativ zu diesem. Dies führt dazu, dass der zwischen dem elektrischen Leiter und der Isolierung angeordnete optische Sensor aufgescheuert und darüber hinaus seine optische als Lichtwellenleiter ausgeführte Zuleitung abgeschert werden können.

In der EP 0 753 130 B1 wird ein in eine mehrschichtige Verbundstruktur eingebetteter Lichtwellenleiter beschrieben. Eine zu detektierende Kraft wird durch die offenbarte spezielle Verbundstruktur auf den faseroptischen Sensor übertragen.

Aufgabe der Erfindung ist es, eine optische Messeinrichtung und Verfahren anzugeben, mit denen ein mit einem Wickelkörper versehener elektrischer Leiter zuverlässig und einfach überwacht werden kann. Zudem ist es Aufgabe der Erfindung entsprechende Verwendungen für die optische Messeinrichtung und das Verfahren anzugeben.

Zur Lösung der Aufgabe wird eine optische Messeinrichtung mit einem elektrischen Leiter entsprechend den Merkmalen des unabhängigen Patentanspruches 1 angegeben.

Bei der erfindungsgemäßen optischen Messeinrichtung handelt es sich um eine optische Messeinrichtung in Verbindung mit einem elektrischen Leiter, welcher mit einem mehrschichtigen Wickelkörper aus einer Vielzahl von Windungen mindestens eines Wickelbandes versehen ist, umfassend mindestens
- einen ersten und einen zweiten mittels mindestens einem Lichtsignal abfragbaren optischen Sensor, wobei
   - der Wickelkörper mit den mindestens zwei optischen Sensoren versehen ist, und
   - der erste Sensor zwischen zwei Wickelkörperschichten eingewickelt zwischen dem elektrischen Leiter und dem zweiten Sensor angeordnet ist,
- eine optisch mit den Sensoren verbundene Einspeiseeinheit zur Einspeisung des Lichtsignals in die Sensoren und
- eine optisch mit den Sensoren verbundene Auswerteeinheit () zur Bestimmung von Verformungsmesswerten aus zumindest einem von den Sensoren herkommenden Lichtsignal, welchen Sensoren jeweils zumindest ein Verformungsmesswert zugeordnet ist,
wobei
- mittels der Auswerteeinheit
   - aus den Verformungsmesswerten der beiden Sensoren ein Vergleichswert und
- aus dem Vergleichswert zumindest ein Messwert für die Verformung des elektrischen Leiters bestimmbar sind.

Bei kraftschlüssigem Kontakt zwischen Wickelkörper und elektrischem Leiter verformt sich der Wickelkörper gemeinsam mit dem elektrischen Leiter bei einer Verformung des elektrischen Leiters. Der Betrag der Verformung über den gemeinsamen Querschnitt von Wickelkörper und elektrischem Leiter verändert sich ausgehend vom elektrischen Leiter nach außen bis zur letzten Wickelkörperschicht stetig. So wird der erste optische Sensor einen Verformungsmesswert Viₙ liefern, der mehr vom elektrischen Leiter bestimmt wird, während der auf der äußersten Wickelkörperschicht angeordnete optische Sensor einen durch den Wickelkörper dominierten Verformungsmesswert Vaₙ liefert. Ein direkter Kontakt des ersten optischen Sensors mit dem elektrischen Leiter zur Bestimmung dessen Verformung kann somit umgangen werden.

Vorteilhafte Ausgestaltungen des erfindungsgemäßen Systems gehen aus den von Anspruch 1 abhängigen Ansprüchen hervor. Dabei kann die Ausführungsform nach Anspruch 1 mit den Merkmalen abhängiger Ansprüche oder vorzugsweise auch denen aus mehreren dieser Ansprüche kombiniert werden. Demgemäß kann das System noch folgende Merkmale aufweisen:
- So kann es vorteilhaft sein, wenn der erste Sensor insbesondere kraftschlüssig zwischen der mit dem elektrischen Leiter in Kontakt stehenden inneren Wickelkörperschicht und der nächsten inneren Wickelkörperschicht angeordnet ist, und wenn der zweite Sensor insbesondere kraftschlüssig auf der äußerste vom elektrischen Leiter abgewandten Wickelkörperschicht angeordnet ist. Die optischen Sensoren weisen somit den größten Abstand zueinander auf, sodass der Betrag des Vergleichswerts maximal wird.
- Es kann von Vorteil sein, wenn mehrere Sensoren entlang der Längserstreckung des elektrischen Leiters vorgesehen sind. Somit kann eine Ortsauflösung der Verformung entlang des elektrischen Leiters ermittelt werden.
- Besonders günstig ist es, wenn die optischen Sensoren als Faser-Bragg-Gitter-Sensoren, die durch Einschreiben eines Bragg-Gitters in einen oder zwei Lichtwellenleiter hergestellt werden können, ausgebildet sind. Die geometrischen Abmessungen solcher vorteilhafter Faser-Bragg-Gitter-Sensoren werden im wesentlichen durch den oder die verwendeten Lichtwellenleiter bestimmt. Der folglich äußerst geringe Platzbedarf von Faser-Bragg-Gitter-Sensoren erleichtert deren Montage an der Längsseite des elektrischen Leiters. Weiterhin ist es vorteilhaft, dass zur Erfassung der Messgrößen keine Ein- und Auskopplung des Lichtsignals aus dem oder den Lichtwellenleitern erforderlich ist. Die Lichtführung erfolgt bei Faser-Bragg-Gitter-Sensoren stets innerhalb des oder der Lichtwellenleiter, wodurch eine besonders unempfindliche Messgrößenerfassung ermöglicht wird.

Zur weiteren Lösung der Aufgabe wird ein Verfahren entsprechend den Merkmalen des unabhängigen Anspruchs 5 angegeben.

Bei dem erfindungsgemäßen Verfahren handelt es sich um ein Verfahren zur Bestimmung einer Verformung eines elektrischen Leiters mittels der optischen Messeinrichtung nach einem der vorhergehenden Ansprüche, welcher elektrische Leiter mit einem mehrschichtigen Wickelkörper aus einer Vielzahl von Windungen mindestens eines Wickelbandes versehen ist, bei welchem Verfahren
- mindestens ein Lichtsignal in mindestens einen ersten und einen zweiten optischen Sensor eingespeist wird,
- die optische Sensoren mit dem Lichtsignal abgefragt werden, wobei
   - der Wickelkörper mit den mindestens zwei optische Sensoren versehen ist, und
   - der erste der beiden Sensoren zwischen zwei Wickelkörperschichten eingewickelt zwischen dem elektrischen Leiter und dem zweiten Sensor angeordnet ist,
- Verformungsmesswerte aus zumindest einem von den Sensoren herkommenden Lichtsignal bestimmt werden,
- den Sensoren jeweils zumindest ein Verformungsmesswert zugeordnet wird,
- aus den Verformungsmesswerten der beiden Sensoren ein Vergleichswert bestimmt wird, und
- aus dem Vergleichswert zumindest ein Messwert für die Verformung des elektrischen Leiters bestimmt wird.

Bei dem erfindungsgemäßen Verfahren ergeben sich die vorstehend für das erfindungsgemäße System erläuterten Vorteile.

Eine weitere vorteilhafte Ausgestaltung des erfindungsgemäßen Verfahrens geht aus dem von Anspruch 5 abhängigen Anspruch hervor. Demgemäß kann das Verfahren noch folgende Merkmale aufweisen:
- So kann es vorteilhaft sein, wenn mehrere zeitlich aufeinander folgende Messwerte für die Verformung des elektrischen Leiters bestimmt werden und hieraus die Bewegungsdynamik des elektrischen Leiters ermittelt wird. So können gerade Schwingungen und Vibrationen des elektrischen Leiters beobachtet werden und bei Unregelmäßigkeiten im Schwingungsverhalten frühzeitig entsprechende Gegenmaßnahmen eingeleitet werden

Mit der Erfindung werden ferner eine Verwendung der erfindungsgemäßen optischen Messeinrichtung sowie eine Verwendung des erfindungsgemäßen Verfahrens für eine elektrodynamische Maschine angegeben, wobei der elektrische Leiter Bestandteil einer Statorwicklung der Maschine ist.

Vorteilhafte Ausgestaltungen der erfindungsgemäßen Verwendungen gehen aus den von Anspruch 7 oder 8 abhängigen Ansprüchen hervor. Demgemäß können die Verwendungen jeweils noch folgende Merkmale aufweisen:
- So kann es vorteilhaft sein, wenn ein elektrischer Generator als elektrodynamische Maschine und ein als Generatorstab ausgeführter elektrischer Leiter vorgesehen sind. Dabei kann es günstig sein, wenn die Sensoren an einer Krümmung einer Generatorstabevolvente angeordnet sind. Gerade Generatorstäbe und insbesondere deren Evolventen sind im Betrieb hohen Belastungen ausgesetzt, so dass sie überdehnen oder gar brechen können. Mit der Messvorrichtung ist ein sicherer Betrieb gewährleistet.

Bevorzugte, jedoch keinesfalls einschränkende Ausführungsbeispiele der Erfindung werden nunmehr anhand der Zeichnung näher erläutert. Zur Veranschaulichung ist die Zeichnung nicht maßstäblich ausgeführt und gewisse Merkmale sind schematisiert dargestellt. Im Einzelnen zeigen
- Figur 1: eine mit einer erfindungsgemäßen optischen Messeinrichtung versehene elektrodynamische Maschine,
- Figur 2: einen Längsschnitt durch einen mit einem Wickelkörper und optischen Sensoren versehnen elektrischen Leiter und
- Figur 3: einen Querschnitt durch den mit dem Wickelkörper und den optischen Sensoren versehnen elektrischen Leiter gemäß Figur 2.

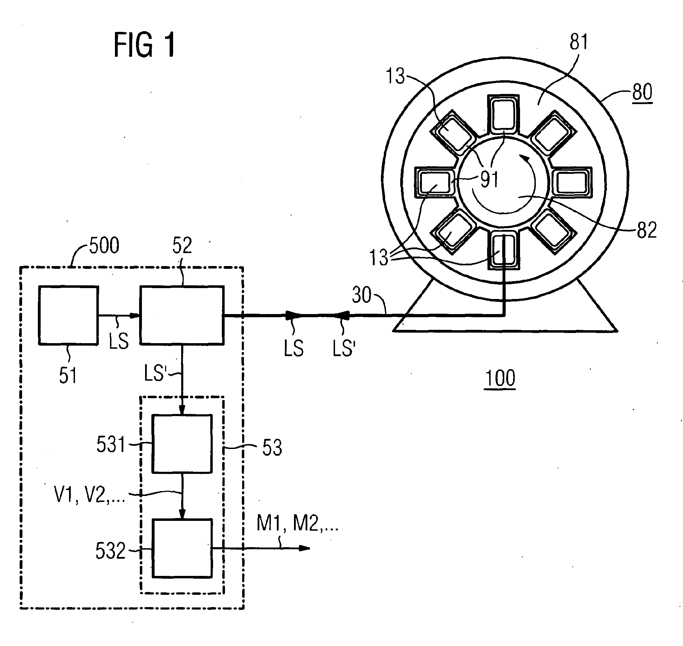

Einander entsprechende Teile sind in den Figuren 1 bis 3 mit denselben Bezugszeichen versehen.

In Figur 1 ist als Beispiel für eine elektrodynamische Maschine 80 ein elektrischer Generator angedeutet, der einen Stator 81 und einen Rotor 82 beinhaltet. Der elektrische Generator 80 wird über die erfindungsgemäße optische Messeinrichtung 100, die zur optischen Messgrößenerfassung innerhalb des Generators 80 bestimmt ist, überwacht. Die optische Messeinrichtung 100 enthält eine außerhalb des Generators 80 angeordnete Sende-/Empfangseinheit 500, die über einen Lichtwellenleiter 30 mit dem Innenraum des Generators 80, insbesondere mit dem Stator 81 optisch verbunden ist. Mittels eines über den Lichtwellenleiter 30 übertragenen Lichtsignals LS werden mindestens zwei optische Sensoren 311 und 31a im Generator 80 abgefragt. Die optischen Sensoren 311 und 31a können aber auch über jeweils einen mit der Sende-/Empfangseinheit 500 verbundenen Lichtwellenleiter 30 abgefragt werden. Der in Figur 1 dargestellte elektrische Generator 80 ist für eine hohe elektrische Leistung insbesondere von mehr als 100 MW ausgelegt.

Im Generator 80 treten Ströme von bis zu einigen kA und Potenzialunterschiede von bis zu mehreren 10 kV auf. An Stelle des in Figur 1 beispielhaft gezeigten elektrischen Generators 80 kann die optische Messeinrichtung 100 ebenso gut für eine elektrodynamische Antriebsmaschine, wie z. B. einen Synchron- oder auch Asynchronmotor, die in ihrem konstruktiven Aufbau dem des elektrischen Generators 80 sehr ähnlich ist, eingesetzt werden. Weiterhin lässt sich die optische Messeinrichtung 100 auch für einen Leistungstransformator, dessen Betriebsspannung sogar bis zu einigen 100 kV betragen kann, einsetzen. Mit dem Lichtwellenleiter 30 kann eine so hohe Potenzialdifferenz grundsätzlich problemlos überbrückt werden. Die eingesetzten optischen Komponenten beeinträchtigen die dielektrische Festigkeit des elektrischen Generators 80 nicht.

Der Lichtwellenleiter 30 wird an einen elektrischen Leiter 13, der innerhalb einer Nut des Stators 82 angeordnet und Bestandteil einer Statorwicklung ist, geführt. Der elektrische Leiter 13 ist hierbei ein so genannter Generatorstab. Direkt am Generatorstab 13 befinden sich die mindestens zwei in Figur 1 nicht näher dargestellten optischen Sensoren 311 und 31a zur direkten Messgrößenerfassung.

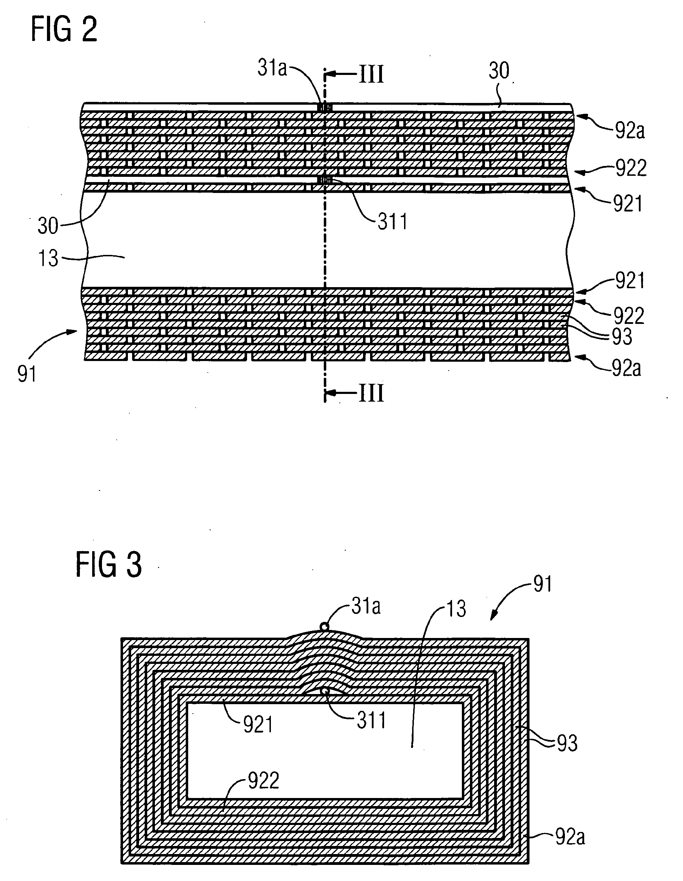

In Figur 2 ist in einem Längsschnitt ein derartiger als Generatorstab ausgeführter elektrischer Leiter 13 näher dargestellt, der mit einem den Leiter 13 umwickelnden mehrschichtigen Wickelkörper 91 versehen ist. Der Wickelkörper 91 ist dabei aus einem oder mehreren Wickelbändern 93 aus elektrisch isolierendem Material ausgebildet. Ein Sensor 311 der beiden optischen Sensoren 311 und 31a ist gemeinsam mit dem ihm zugeordneten Lichtwellenleiter 30 bzw. Lichtwellenleiterteil zwischen der dem elektrischen Leiter 13 am nächsten angeordneten, insbesondere mit diesem in kraftschlüssigem Kontakt stehenden Wickelkörperschicht 921 und der nächst folgenden Wickelkörperschicht 922 kraftschlüssig angeordnet. Demgegenüber ist der andere Sensor 31a der beiden optischen Sensoren 311 und 31a mit dem ihm zugeordneten Lichtwellenleiter 30 bzw. Lichtwellenleiterteil auf der äußersten, vom elektrischen Leiter abgewandten Wickelkörperschicht 92a kraftschlüssig angeordnet. Die beiden optischen Sensoren 311 und 31a sind insbesondere übereinander angeordnet, d.h. sie liegen im wesentlichen auf der selben von der Oberfläche des elektrischen Leiters 13 ausgehenden Oberflächennormalen. Dies gewährleistet, dass sich eine Verformung des elektrischen Leiters 13 auf beide optischen Sensoren 311 und 31a gleichsam auswirkt.

In Figur 3 ist der in Figur 2 mit III bezeichnete Querschnitt des beispielhaft rechteckig ausgebildeten Generatorstabs 13 mit dem Wickelkörper 91 und den beiden optischen Sensoren 311 und 31a dargestellt.

Sind die optischen Sensoren 311 und 31a, wie in Figuren 2 angedeutet, als Faser-Bragg-Gitter-Sensoren ausgeführt, können diese jeweils unterschiedliche spezifische Schwerpunktswellenlängen - die so genannten Bragg-Wellenlängen - aufweisen. Die Faser-Bragg-Gitter-Sensoren 311 und 31a werden von dem Lichtsignal LS, das von einer breitbandigen Lichtquelle 51 erzeugt wird, abgefragt. Über einen Koppler 52 und einen oder mehrere Lichtwellenleiter 30 wird das Lichtsignal LS in die Faser-Bragg-Gitter-Sensoren 311 und 31a eingespeist. In jedem Faser-Bragg-Gitter-Sensor 311 und 31a wird von dem eingespeisten Lichtsignal LS ein Anteil mit der jeweiligen Schwerpunktswellenlänge als Teil-Reflex-Signal zurückreflektiert. Der übrige Teil des Lichtsignals LS passiert dagegen den betreffenden Faser-Bragg-Gitter-Sensor 311 oder 31a und trifft gegebenenfalls auf den nächsten Faser-Bragg-Gitter-Sensor 311 bzw. 31a. Am Koppler 52 steht dann ein von den Faser-Bragg-Gitter-Sensoren 311 und 31a zurückreflektiertes Lichtsignal LS' an, das sich aus den Teil-Reflex-Lichtsignalen der einzelnen Faser-Bragg-Gitter-Sensoren 311 und 31a zusammensetzt. Die Schwerpunktswellenlängen von mehreren Faser-Bragg-Gitter-Sensoren 311 und 31a eines Lichtwellenleiters 30 müssen jedoch nicht gezwungenermaßen unterschiedlich sein, wenn zur Unterscheidung der Antwortsignale verschiedene Faser-Bragg-Gitter-Sensoren 311 und 31a, beispielsweise ein so genanntes "optical time domain reflectometer" verwendet wird.

Erfahren die Faser-Bragg-Gitter-Sensoren 311 und 31a eine Verformung, ändert sich deren Schwerpunktswellenlänge entsprechend dem Betrag der Verformung und damit der Wellenlängengehalt (= das Wellenlängenspektrum) des vom betreffenden Sensor 311, 31a reflektierten Teil-Reflex-Lichtsignals. Diese Veränderung im Wellenlängengehalt dient als Maß für die zu erfassende Verformung.

Es ist aber auch ein Transmissionsbetrieb denkbar (in den Figuren nicht gezeigt). Hier muss im Gegensatz zum Reflektionsbetrieb das gesamte von der Lichtquelle 51 ausgesandte Wellenlängenspektrum auf fehlende Wellenlängenbereiche untersucht werden. Denn diese fehlenden Wellenlängenbereiche entsprechen den jeweiligen Schwerpunktswellenlängen der einzelnen Sensoren 311 und 31a.

Das von den Faser-Bragg-Gitter-Sensoren 311 und 31a herkommende, in den Koppler 52 wieder eingespeiste Lichtsignal LS' wird vom Koppler 52 zu einer Auswerteeinheit 53 geleitet. Diese umfasst insbesondere einen optoelektrischen Wandler und einen Analog/Digital-Wandler, welche zusammengefasst mit 531 bezeichnet sind, sowie einen digitalen Signalprozessor 532. Der optoelektrische Wandler weist vorteilhafterweise ein spektralselektives Element zur Selektion der einzelnen Teilreflexlichtsignale, beispielsweise in Gestalt eines Polychromators, und einen gegebenenfalls auch mehrteiligen Lichtempfänger auf. Zur Analyse des Lichtspektrums sind Gitter- oder Beugungsspektrometer denkbar. Bei der Verwendung eines "optical time domain reflectometers" genügt beispielsweise auch ein kostengünstiges Kantenfilter. Im Anschluss an die optoelektronische Wandlung findet im Analog/Digital-Wandler eine Analog/Digital-Wandlung statt. Das digitalisierte Ausgangssignal V1ₙ, Vaₙ (n = 1, 2, ...) des Analog/Digital-Wandlers wird dem digitalen Signalprozessor 532 zugeführt, mittels welchem aus den in den Faser-Bragg-Gitter-Sensoren 311 oder 31a erfassten Verformungen ein oder mehrere Messwerte Mₙ für die Verformung des elektrischen Leiters 13 ermittelt werden.

Im Transmissionsbetrieb hingegen kann auf den Koppler 52 verzichtet werden. Hier wird an einem Ende des Lichtwellenleiters 30 das Lichtsignal LS mittels der Lichtquelle 51 eingekoppelt und am anderen Ende des Lichtwellenleiters 30 von einem optoelektrischen Wandler detektiert.

Die Lichtquelle 51, der Koppler 52 und die Auswerteeinheit 53 sind in der Sende-/Empfangseinheit 500 zusammengefasst, wobei die Lichtquelle 51 und der Koppler 52 als Einspeiseeinheit zur Einspeisung des Lichtsignals LS in die Faser-Bragg-Gitter-Sensoren 311 oder 31a aufgefasst werden kann. In einem anderen nicht gezeigten Ausführungsbeispiel können diese Untereinheiten oder Teile davon voneinander getrennt, also nicht als gemeinsame Sende-/Empfangseinheit 500, ausgebildet sein. Außerdem ist auch eine rein analoge Auswertung, beispielsweise mittels einer fest verdrahteten elektronischen Schaltung möglich. Dann wäre kein Analog/Digital-Wandler vorhanden und die Auswerteeinheit 53 mittels Analogtechnik realisiert.

Von der Sende-/Empfangseinheit 500 erzeugte Messwerte Mₙ werden beispielsweise mittels einer Funkübertragung zu einer in Figur 1 nicht dargestellten Datenerfassungseinheit übermittelt. Die Datenübertragung kann jedoch grundsätzlich auch leitungsgebunden elektrisch oder optisch erfolgen. Außerdem können die Sende-/Empfangseinheit 500 und die Datenerfassungseinheit auch als gemeinsame Einheit ausgebildet sein.

Bei einer Krümmung durch beispielsweise kraftinduzierte Verformung des elektrischen Leiters 13 beispielsweise bezüglich seiner Längsachse dehnt sich ein Teil des elektrischen Leiters 13 gemeinsam mit dem entsprechenden Teil des Wickelkörpers 91 während die gegenüberliegenden Teile gestaucht werden. Die gemeinsame Verformung des Wickelkörpers 91 mit dem elektrischen Leiter 13 setzt dabei einen kraftschlüssigen Kontakt zwischen Wickelkörper 91 und elektrischem Leiter 13 voraus. Der Betrag der Verformung über den gemeinsamen Querschnitt III von Wickelkörper 91 und elektrischem Leiter 13 verändert sich von innen (ausgehend vom elektrischen Leiter 13) nach außen (bis zur letzten Wickelkörperschicht 92a) stetig. So wird der in unmittelbarer Nähe des elektrischen Leiters 13 im Wickelkörper 91 angeordnete optische Sensor 311 einen Verformungsmesswert V1ₙ liefern, der vom elektrischen Leiter 13 bestimmt wird, während der auf der äußersten Wickelkörperschicht 92a angeordnete optische Sensor 31a einen durch den Wickelkörper 91 bestimmten Verformungsmesswert Vaₙ liefert.

Mittels des Signalprozessors 532 der Auswerteeinheit 53 werden beide Verformungsmesswerte Vaₙ und V1ₙ, beispielsweise durch Subtraktion, miteinander verglichen und ein Vergleichswert ΔVₙ (z. B. ΔVₙ = Vaₙ - V1ₙ) ermittelt. Dieser Vergleichswert ΔVₙ wird dann mit in einer Datenbank auf einem Speichermedium gespeicherten Referenzvergleichswerten ΔVrefₘ (m = 1, 2, ...) verglichen. Die Referenzvergeichswerte ΔVrefₘ wurden zuvor unter bekannten, definierten Bedingungen erfasst. Somit wird nach Übereinstimmung des Vergleichswerts ΔVₙ mit einem der Referenzvergleichswerte ΔVrefₘ ein Messwert Mₙ für die Verformung des elektrischen Leiters ermittelt.

Werden mehrer Lichtsignale LSₙ regelmäßig in festen Zeitabständen hintereinander, insbesondere in einem gepulsten Modus, mit einer hinreichen hohen Wiederholrate von 500 Hz bis 10 kHz in die optischen Sensoren 311 oder 31a eingespeist, können eine durch die Wiederholrate bestimmte zeitliche folge von Messwerten Mₙ für die Verformung des elektrischen Leiters 13 bestimmt werden, die eine Abbildung der Dynamik des elektrischen Leiters 13 ermöglichen. So kann die Verformungs- bzw. Auslenkungsamplitude eines in Schwingung- oder in Vibration versetzten elektrischen Leiters 13 zeitaufgelöst ermittelt werden.

Unterschreitet der Betrag des Vergleichswert ΔVₙ einen vorbestimmten Schwellwert, insbesondere ist der Betrag des Vergleichswerts ΔVₙ gleich Null oder zumindest annähernd Null, so wird von der Auswerteeinheit 53 direkt ein Warnsignal an die Datenerfassungseinheit übermittelt. Da sich nach einer gewissen Betriebszeit im Zuge einer fortschreitenden Alterung die kraftschlüssige Verbindung zwischen Wickelkörper 91 und elektrischem Leiter 13 löst, wird nach dem Lösen des Wickelkörpers 91 vom elektrischen Leiter 13 der vom in unmittelbarer Nähe des elektrischen Leiters 13 im Wickelkörper 91 angeordneten optischen Sensor 311 ermittelte Verformungsmesswert V1ₙ ebenso wie der vom auf der äußersten Wickelkörperschicht 92a angeordneten optischen Sensor 31a ermittelte Verformungsmesswert Vaₙ nur vom Wickelkörper 91 bestimmt. Somit weisen beide Verformungsmesswerte V1ₙ und Vaₙ zumindest annähernd denselben Wert auf. Der Betrag des Vergleichwerts ΔVₙ ist folglich gleich Null oder zumindest näherungsweise gleich Null. Mit der Übermittlung des Warnsignals an die Datenerfassungseinheit kann also ein kritischer Alterungsgrad des mit dem Wickelkörper 91 versehenen elektrischen Leiters 13 bestimmt werden und darüber hinaus eine Restlebensdauer ermittelt werden. Es können somit rechtzeitig entsprechende Gegen- bzw. Reparaturmaßnahmen eingeleitet werden.

Als besonders günstigen Anbringungsort der optischen Sensoren 311 oder 31a entlang des als Generatorstab ausgeführten elektrischen Leiters 13 ist die Krümmung einer Generorstabevolvente (Austrittsbereich des Generatorstabs aus dem Blechpaket des Rotors), da an diesem Ort die größte Auslenkung und damit die größte Verformung des Generatorstabs 13 in Generatorbetrieb vorherrscht. Ist der Querschnitt des Generatorstabs 13 beispielsweise rechteckig, wie in Figur 3 angedeutet, ausgeführt lässt sich durch die Anbringung mehrerer optischer Sensoren 311 oder 31a an den Kanten des Generatorstabs 13 aus einer folge von zeitlich hintereinander ermittelten Messwerten Mₙ für die Verformung des Generatorstabs dessen Bewegungstrajektorie ermitteln.

## Patentansprüche

1. Optische Messeinrichtung (100) in Verbindung mit einem elektrischen Leiter (13), welcher mit einem mehrschichtigen Wickelkörper (91) aus einer Vielzahl von Windungen mindestens eines Wickelbandes (93) versehen ist, umfassend mindestens
- einen ersten und einen zweiten mittels mindestens einem Lichtsignal (LS) abfragbaren optischen Sensor (311, 31a), wobei
- der Wickelkörper (91) mit den mindestens zwei optischen Sensoren (311, 31a) versehen ist, und
- der erste Sensor (311) zwischen zwei Wickelkörperschichten (921, 922) eingewickelt zwischen dem elektrischen Leiter (13) und dem zweiten Sensor (31a) angeordnet ist,
- eine optisch mit den Sensoren (311, 31a) verbundene Einspeiseeinheit zur Einspeisung des Lichtsignals (LS) in die Sensoren (311, 31a) und
- eine optisch mit den Sensoren (311, 31a) verbundene Auswerteeinheit (53) zur Bestimmung von Verformungsmesswerten (V1ₙ, Vaₙ) aus zumindest einem von den Sensoren (311, 31a) herkommenden Lichtsignal (LS'), welchen Sensoren (311, 31a) jeweils zumindest ein Verformungsmesswert (V1ₙ, Vaₙ) zugeordnet ist,
wobei
- mittels der Auswerteeinheit (53)
- aus den Verformungsmesswerten (V1ₙ, Vaₙ) der beiden Sensoren (311, 31a) ein Vergleichswert (ΔVₙ) und
- aus dem Vergleichswert (ΔVₙ) zumindest ein Messwert (Mₙ) für die Verformung des elektrischen Leiters (13) bestimmbar sind.

2. Optische Messeinrichtung nach Anspruch 1, **dadurch gekennzeichnet, dass**
- der erste Sensor (311) zwischen der mit dem elektrischen Leiter (13) in Kontakt stehenden inneren Wickelkörperschicht (921) und der nächsten inneren Wickelkörperschicht (922) angeordnet ist, und
- der zweite Sensor (31a) auf der äußersten vom elektrischen Leiter (13) abgewandten Wickelkörperschicht (92a) angeordnet ist.

3. Optische Messeinrichtung nach Anspruch 1 oder 2, **gekennzeichnet durch** mehrere Sensoren (311, 31a) entlang des elektrischen Leiters (13).

4. Optische Messeinrichtung nach einem der vorhergehenden Ansprüche, **gekennzeichnet durch** Faser-Bragg-Gitter-Sensoren als optische Sensoren (311, 31a).

5. Verfahren zur Bestimmung einer Verformung eines elektrischen Leiters (13) mittels der optischen Messeinrichtung (100) nach einem der vorhergehenden Ansprüche, welcher elektrische Leiter (13) mit einem mehrschichtigen Wickelkörper (91) aus einer Vielzahl von Windungen mindestens eines Wickelbandes (93) versehen ist, bei welchem Verfahren
- mindestens ein Lichtsignal (LS) in mindestens einen ersten und einen zweiten optischen Sensor (311, 31a) eingespeist wird,
- die optische Sensoren (311, 31a) mit dem Lichtsignal (LS) abgefragt werden, wobei
- der Wickelkörper (91) mit den mindestens zwei optische Sensoren (311, 31a) versehen ist, und
- der erste der beiden Sensoren (311, 31a) zwischen zwei Wickelkörperschichten (921, 922) eingewickelt zwischen dem elektrischen Leiter (13) und dem zweiten Sensor (31a) angeordnet ist,
- Verformungsmesswerte (V1ₙ, Vaₙ) aus zumindest einem von den Sensoren (311, 31a) herkommenden Lichtsignal (LS') bestimmt werden,
- den Sensoren (311, 31a) jeweils zumindest ein Verformungsmesswert (V1ₙ, Vaₙ) zugeordnet wird,
- aus den Verformungsmesswerten (V1ₙ, Vaₙ) der beiden Sensoren (311, 31a) ein Vergleichswert (ΔVₙ) bestimmt wird, und
- aus dem Vergleichswert (ΔVₙ) zumindest ein Messwert (Mₙ) für die Verformung des elektrischen Leiters (13) bestimmt wird.

6. Verfahren nach Anspruch 5, **dadurch gekennzeichnet, dass** mehrere zeitlich aufeinander folgende Messwerte (Mₙ) für die Verformung des elektrischen Leiters (13) bestimmt werden und hieraus die Bewegungsdynamik des elektrischen Leiters (13) ermittelt wird.

7. Verfahren nach Anspruch 5 oder 6, wobei der elektrische Leiter (13) Bestandteil einer Statorwicklung einer elektrodynamischen Maschine (80) ist.

8. Verwendung der optischen Messeinrichtung (100) nach einem der Ansprüche 1 bis 4 für eine elektrodynamische Maschine (80), wobei der elektrische Leiter (13) Bestandteil einer Statorwicklung der Maschine (80) ist.

9. Verwendung nach Anspruch 8, **gekennzeichnet durch** einen elektrischen Generator als elektrodynamische Maschine (80) und einen als Generatorstab ausgeführten elektrischen Leiter (13).

10. Verwendung nach Anspruch 9, **gekennzeichnet durch** eine Anordnung von optischen Sensoren (311, 31a) an einer Krümmung einer Generatorstabevolvente.

## Claims

1. Optical measuring device (100) in conjunction with an electrical conductor (13) provided with a multilayered winding body (91) composed of a multiplicity of turns of at least one winding tape (93), comprising at least
- a first and a second optical sensor (311, 31a) which can be interrogated by means of at least one light signal (LS),
wherein
- the winding body (91) is provided with the at least two optical sensors (311, 31a), and
- the first sensor (311) is arranged between the electrical conductor (13) and the second sensor (31a) in a manner wound in between two winding body layers (921, 922),
- a feeding-in unit optically connected to the sensors (311, 31a) and serving for feeding the light signal (LS) into the sensors (311, 31a), and
- an evaluation unit (53) optically connected to the sensors (311, 31a) and serving for determining deformation measurement values (V1ₙ, Vaₙ) from at least one light signal (LS') coming from the sensors (311, 31a), in each case at least one deformation measurement value (V1ₙ, Vaₙ) being assigned to said sensors (311, 31a),
wherein
- by means of the evaluation unit (53)
- a comparison value (ΔVₙ) can be determined from the deformation measurement values (V1ₙ, Vaₙ) of the two sensors (311, 31a) and
- at least one measurement value (Mₙ) for the deformation of the electrical conductor (13) can be determined from the comparison value (ΔVₙ).

2. Optical measuring device according to Claim 1, **characterized in that**
- the first sensor (311) is arranged between the inner winding body layer (921), in contact with the electrical conductor (13) and the next inner winding body layer (922), and
- the second sensor (31a) is arranged on the outermost winding body layer (92a) remote from the electrical conductor (13).

3. Optical measuring device according to Claim 1 or 2, **characterized by** a plurality of sensors (311, 31a) along the electrical conductor (13).

4. Optical measuring device according to any of the preceding claims, **characterized by** fibre Bragg grating sensors as optical sensors (311, 31a).

5. Method for determining a deformation of an electrical conductor (13) by means of the optical measuring device (100) according to any of the preceding claims, which electrical conductor (13) is provided with a multilayered winding body (91) composed of a multiplicity of turns of at least one winding tape (93), in which method
- at least one light signal (LS) is fed into at least a first and second optical sensor (311, 31a),
- the optical sensors (311, 31a) are interrogated by means of the light signal (LS), wherein
- the winding body (91) is provided with the at least two optical sensors (311, 31a), and
- the first of the two sensors (311, 31a) is arranged between the electrical conductor (13) and the second sensor (31a) in a manner wound in between two winding body layers (921, 922),
- deformation measurement values (V1ₙ, Vaₙ) are determined from at least one light signal (LS') coming from the sensors (311, 31a),
- in each case at least one deformation measurement value (V1ₙ, Vaₙ) is assigned to the sensors (311, 31a),
- a comparison value (ΔVₙ) is determined from the deformation measurement values (V1ₙ, Vaₙ) of the two sensors (311, 31a), and
- at least one measurement value (Mₙ) for the deformation of the electrical conductor (13) is determined from the comparison value (ΔVₙ).

6. Method according to Claim 5, **characterized in that** a plurality of temporally successive measurement values (Mₙ) for the deformation of the electrical conductor (13) are determined and the movement dynamics of the electrical conductor (13) are determined therefrom.

7. Method according to Claim 5 or 6, wherein the electrical conductor (13) is part of a stator winding of an electrodynamic machine (80).

8. Use of the optical measuring device (100) according to any of Claims 1 to 4 for an electrodynamic machine (80), wherein the electrical conductor (13) is part of a stator winding of the machine (80).

9. Use according to Claim 8, **characterized by** an electrical generator as electrodynamic machine (80) and an electrical conductor (13) embodied as a generator rod.

10. Use according to Claim 9, **characterized by** an arrangement of optical sensors (311, 31a) on a curvature of a generator rod involute.

## Revendications

1. Dispositif (100) optique de mesure en liaison avec un conducteur (13) électrique, qui est muni d'un corps (91) enroulé en plusieurs couches, constitué d'une pluralité de spires d'au moins une bande (93) enroulée, comprenant au moins,
- un premier et un deuxième capteurs (311, 31a) optiques pouvant être interrogés au moyen d'un signal (LS) lumineux,
dans lequel
- le corps (91) enroulé et muni des au moins deux capteurs (311, 31a) optiques, et
- le premier capteur (311) est disposé entre deux couches (921, 922) du corps enroulé en étant enroulé entre le conducteur (13) électrique et le deuxième capteur (31a),
- une unité d'alimentation, qui est reliée optiquement aux capteurs (311, 31a) pour l'injection du signal (LS) lumineux dans les capteurs (311, 31a) et
- une unité (53) d'exploitation, reliée optiquement aux capteurs (311, 31a) pour la détermination de valeurs (V1ₙ, Vaₙ) de mesure de déformation à partir d'au moins un signal (LS') lumineux provenant des capteurs (311, 31a), capteurs (311, 31a) auxquels est associé respectivement au moins une valeur (V1ₙ, Vaₙ) de déformation,
dans lequel
- au moyen de l'unité (53) d'exploitation
- il peut être déterminé à partir des valeurs (V1ₙ, Vaₙ) de mesure de déformation des deux capteurs (311, 31a), une valeur (ΔVₙ) de comparaison et,
- à partir de la valeur (ΔVₙ) de comparaison, au moins une valeur (Mₙ) de mesure de la déformation du conducteur (13) électrique.

2. Dispositif optique de mesure suivant la revendication 1, **caractérisé en ce que**
- le premier capteur (311) est disposé entre la couche (921) intérieure du corps enroulé en contact avec le conducteur (13) électrique et la couche (922) intérieure immédiatement suivante du corps enroulé et
- le deuxième capteur (31a) est disposé sur la couche (92a) du corps enroulé la plus à l'extérieur, éloignée du conducteur (13) électrique.

3. Dispositif optique de mesure suivant la revendication 1 ou 2, **caractérisé par** plusieurs capteurs (311, 31a) le long du conducteur (13) électrique.

4. Dispositif optique de mesure suivant l'une des revendications précédentes, **caractérisé par** des capteurs à fibre-réseau de Bragg comme capteurs (311, 31a) optiques.

5. Procédé de détermination d'une déformation d'un conducteur (13) électrique au moyen du dispositif (100) optique de mesure suivant l'une des revendications précédentes, le conducteur (13) électrique étant muni d'un corps (91) enroulé a plusieurs couches, composé d'une pluralité de spires d'au moins une bande (93) enroulée, procédé dans lequel
- on envoie au moins un signal (LS) lumineux dans au moins un premier et un deuxième capteurs (311, 31a) optiques,
- on interroge les capteurs (311, 31a) optiques par le signal (LS) lumineux, dans lequel
- le corps (91) enroulé est muni d'au moins deux capteurs (311, 31a) optiques, et
- le premier des deux capteurs (311, 31a) est disposé entre deux couches (921, 922) du corps enroulé, en étant enroulé entre le conducteur (13) électrique et le deuxième capteur (31a)
- on détermine des valeurs (V1ₙ, Vaₙ) de mesure de déformation à partir d'au moins un signal (LS') lumineux provenant des capteurs (311, 31a),
- on associe aux capteurs (311, 31a) respectivement au moins une valeur (V1ₙ, Vaₙ) de mesure de déformation,
- on détermine une valeur (ΔVₙ) de comparaison à partir des valeurs (V1ₙ, Vaₙ) de mesure de déformation des deux capteurs (311, 31a) et
- on détermine au moins une valeur de mesure (Mₙ) de la déformation du conducteur (13) électrique à partir de la valeur (ΔVₙ) de comparaison.

6. Procédé suivant la revendication 5, **caractérisé en ce que** l'on détermine plusieurs valeurs (Mₙ) de mesure, se succédant dans le temps, de la déformation du conducteur (13) électrique et on en détermine la dynamique de mouvement du conducteur (13) électrique.

7. Procédé suivant la revendication 5 ou 6, dans lequel le conducteur (13) électrique fait partie d'un enroulement statorique d'une machine (80) électrodynamique.

8. Utilisation du dispositif (100) optique de mesure suivant l'une des revendications 1 à 4, pour une machine (80) électrodynamique, le conducteur (13) électrique faisant partie d'un enroulement de stator de la machine (80).

9. Utilisation suivant la revendication 8, **caractérisée par** une génératrice électrique comme machine (80) électrodynamique et un conducteur (13) électrique réalisé sous la forme d'un barreau de génératrice.

10. Utilisation suivant la revendication 9, **caractérisée par** une position de capteur (311, 31a) optique sur une courbure d'une développante de barreau de génératrice.
